# EUROPEAN PATENT APPLICATION

(11) **EP 0 818 866 A2**
(43) Date of publication of application: **14.01.1998**
(21) Application number: 97201954.1
(22) Date of filing: 26.06.1997
(51) Int. Cl.: H02H 7/16, H01G 2/14

(54) **Abnormality detecting device for a phase advancing capacitor**

(30) Priority: 03.07.1996 JP 193939/96
(71) Applicant: Yamamoto, Makoto, Nagano (JP)
(72) Inventor: Yamamoto, Makoto, Nagano (JP); Karasawa, Isao, Matsumoto, Nagano (JP)
(74) Representative: Perani, Aurelio

(57) **Abstract**

The invention relates to an abnormality detecting device for a phase advancing capacitor, which consists of a needle-like signal wire 9, which is mechanically interrupted when an outer casing 2 having the phase advancing capacitor 1 incorporated in an airtight state expands by an increase of the internal pressure of the casing, a tripping means for detecting interruption of the needle-like signal wire 9 and causing the phase advancing capacitor 1 to trip from power lines, and a warning means for outputting alarm when interruption of the needle-like signal wire 9 is detected. Since the tripping means operates when the internal pressure of the casing is increased when abnormality occurs in the phase advancing capacitor, the phase advancing capacitor can be prevented from explosion and being broken, and since alarm is outputted, a maintenance personnel is able to know the abnormality and to immediately replace the phase advancing capacitor, it is possible to avoid the use of power at a bad power factor.

## Description

### BACKGROUND OF THE INVENTION

### Field of the Invention

The present invention relates to an abnormality detecting device for a phase advancing capacitor secured in a high voltage power incoming substation facilities, and in particular relates to an abnormality detecting device for a phase advancing capacitor preferably used for avoiding to use power in an inferior power factor condition.

### Description of the Related Art

A phase advancing capacitor is provided in order to improve the power factor in a high voltage power incoming substation. Although this kind of phase advancing capacitor is used to correct disorder of current waveforms resulting from higher harmonics, etc., an excessive higher harmonic current flows to cause a phase advancing capacitor to encounter an abnormality. This abnormality may cause the phase advancing capacitor to explode and to be broken. If such an explosion or breakage should occur, the contents of the capacitor may be splashed over in a high voltage power incoming substation, and the post-treatment thereof will result in a great deal of work and need a plenty of time. Therefore, such a construction, where the internal wiring is interrupted due to expansion of the capacitor or a circuit breaker secured at the inlet side thereof is caused to trip, have been employed.

Although a maintenance personnel periodically inspects such a high voltage power incoming substation, it is very difficult for him to find out abnormality even though the internal wiring is interrupted due to expansion of a phase advancing capacitor. Therefore, even though by interruption of the internal wiring it is possible to prevent a phase advancing capacitor from exploding and being resultantly damaged, power would be used in an inferior power factor condition until he finds out the interruption of the phase advancing capacitor. Therefore, if such a construction is employed where a circuit breaker is used and trips, it is possible to easily find out a tripping of the circuit breaker. However, should a circuit breaker trip immediately after a periodical inspection which is carried out, for example, once every month, power would be used at an inferior power factor for almost one month till the next periodical inspection. That is, such conventional means inherently have shortcomings as described above.

### SUMMARY OF THE INVENTION

The invention was developed to preferably solve the abovementioned shortcomings in view thereof, and it is therefore an object of the invention to provide an abnormality detecting device for a phase advancing capacitor, by which any abnormality of a phase advancing capacitor can be easily detected.

In order to achieve the abovementioned themes and to accomplish the object, an abnormality detecting device for detecting abnormality of a phase advancing capacitor is characterized in that the same comprises:
a fuse wire disposed in a casing, in which said phase advancing capacitor is accommodated in an airtight state, and mechanically interrupted when said casing expands, and
a tripping means which detects interruption of said fuse wire to cause said phase advancing capacitor to trip from a power line.

In order to achieve the abovementioned object, another invention of the present application is an abnormality detecting device capable of detecting abnormality of a phase advancing capacitor comprising:
a fuse wire which is interrupted when an excessive higher harmonic current flows into said phase advancing capacitor, and
a tripping means which detects interruption of said fuse wire to cause said phase advancing capacitor to trip from a power line.

### BRIEF DESCRIPTION OF THE DRAWINGS

Fig.1(a) is a cross-sectional view of a phase advancing capacitor according to a first preferred embodiment of the invention, Fig.1(b) is an enlarged view of major parts thereof.

Fig.2 is a connection diagram between a phase advancing capacitor according to a second preferred embodiment of the invention and a tripping means thereof.

Fig.3(a) is a view of major parts of a phase advancing capacitor according to a third preferred embodiment, Fig.3(b) is a view showing the upper surface thereof, Fig.3(c) is a cross-sectional view thereof when the same is expanded, and Fig.3(d) is a view showing the upper surface thereof.

Fig.4(a) is a side elevational view of a fuse wire shown in Fig.3 and a perspective view thereof.

Fig.5 is a connection diagram between a phase advancing capacitor according to a fourth preferred embodiment and a tripping means thereof.

Fig.6(a) is a cross-sectional view of a phase advancing capacitor according to a fifth preferred embodiment, Fig.6(b) is a view of major parts of a phase advancing capacitor according to the fifth preferred embodiment of the invention, and Fig.6(c) is a view showing the upper surface thereof.

### DETAILED DESCRIPTION OF THE PREFERRED EMBODIMENTS

Next, a description will be given of an abnormality detecting device for a phase advancing capacitor according to the invention, with some examples used as preferred embodiments, with reference to the accompanying drawings.

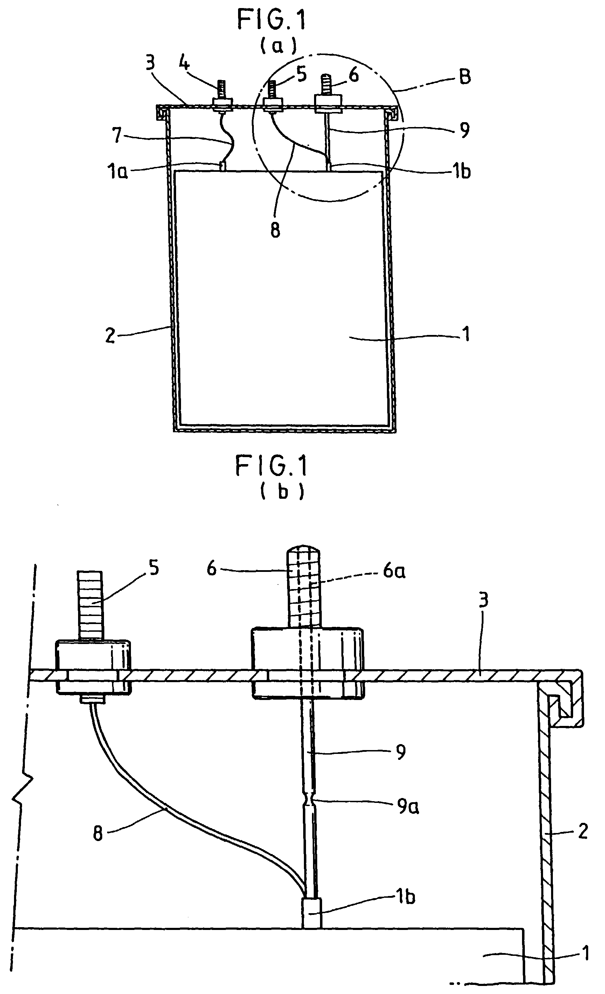

Fig.1(a) is a cross-section view of a phase advancing capacitor according to a first preferred embodiment of the invention, Fig.1(b) is an enlarged view showing the area B illustrated in Fig.1(a). An upper lid 3 is airtightly fixed by caulking to an outer casing 2 in which a phase advancing capacitor 1 is accommodated. An electrode terminal 6 for signals is fixed at the upper lid 3 in addition to two electrode terminals 4,5, and two electrodes 1a,1b of the phase advancing capacitor 1 are respectively connected to the electrode terminals 4,5 by lead wires 7,8. A metallic needle-like signal wire 9 is made erect from the electrode 1b as a fuse wire, passing through the upper lid 3. It is constructed that the needle-like signal wire 9 is caused to pass through the center hole 6a of the electrode terminal 6 for signals when the upper lid 3 is placed on the outer casing 2, and the signal wire 9 is soldered to the electrode terminal 6 after the upper lid 3 is fixed to the outer casing 2 by caulking. A diameter-reduced part 9a is provided at a middle part of the needle-like signal wire 9 at a position facing inside of the outer casing 2, and the needle-like signal wire is constructed so as to be easily interrupted at the diameter-reduced part 9a when the same is pulled. A warning means (such as a lamp, a silencer, etc.), which is able to issue alarm when voltage to appear at the electrode terminal 6 for signals is caused to disappear, is provided at a warning panel (not illustrated).

In the construction described above, in a case where an excessive higher harmonic current flows into a phase advancing capacitor from a power line (not illustrated) connected to the electrode terminals 4,5 to thereby cause the phase advancing capacitor to expand, the internal pressure of the outer casing 2 is increased. With an increase of this internal pressure, the upper lid 3 is caused to expand outwardly, whereby the needle-like signal wire 9 is pulled between the connection part with the phase advancing capacitor and the electrode terminal 6 for signals, and the same needle-like signal wire 9 is interrupted at its diameter-reduced part 9a. The voltage which should appear at the electrode terminal 6 for signals is caused to disappear, and alarm is issued. Thereby, a maintenance personnel is able to know abnormality of the phase advancing capacitor 1 soon. Furthermore, a circuit breaker, which causes the phase advancing capacitor 1 to trip from the power line on the basis of disappearance of the voltage at the electrode terminal 6 for signals, may be caused to automatically operate.

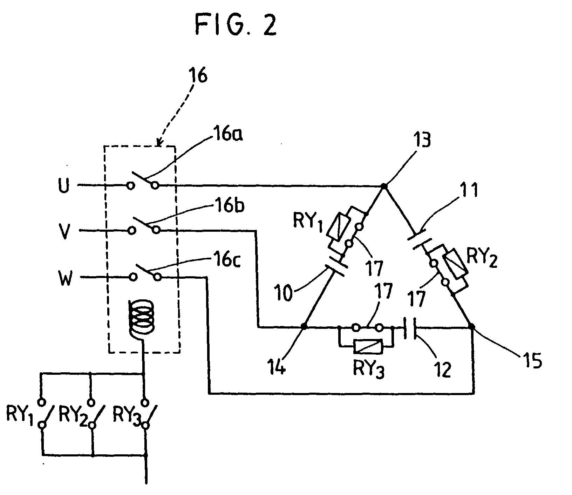

Fig.2 is a connection diagram between a phase advancing capacitor according to a second preferred embodiment of the invention and a tripping means. Three phase advancing capacitors 10,11,12 are delta-connected, and the respective connection points 13,14,15 are connected to phase U, Phase V and Phase W of the respective power lines via switches 16a,16b,16c of the circuit breaker 16. These switches 16a,16b,16c are usually closed, and they are opened when any one of relay switches RY1, RY2, RY3 is turned on.

A fuse 17 which is electrically interrupted when excessive higher harmonics flow into the corresponding phase advancing capacitor 10 is provided between one electrode of the abovementioned phase advancing capacitor 10 (the same construction is employed for other phase advancing capacitors 11, 12) and the connection point 13, wherein the relay RY1 is turned on when interruption of the fuse 17 is detected, the abovementioned circuit breaker 16 is opened, and a detection signal is sent to a warning means (not illustrated), wherein alarm is issued.

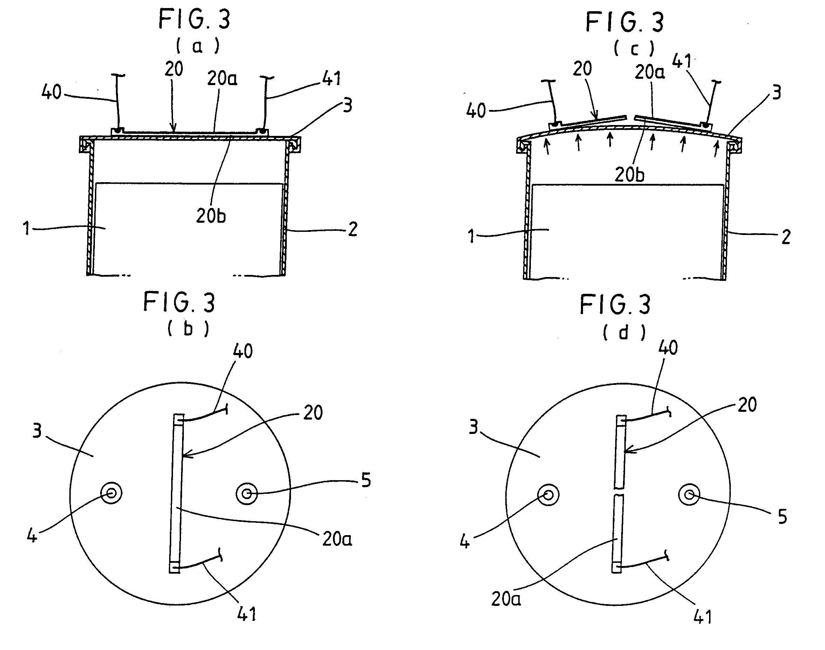

In the second preferred embodiment described with reference to Fig.2, although a fuse which is electrically interrupted is used, it is needless to say that a mechanically interrupting means described with respect to Fig.1 may be employed. Fig.3 is a view showing a phase advancing capacitor according to a third preferred embodiment, which is intended to be mechanically interrupted. Fig.3(a) is a cross-sectional view of the upper lid 3 portion of the outer casing 2 of a phase advancing capacitor. With a phase advancing capacitor according to the third preferred embodiment, electrode terminals 4,5 which are connected to the electrodes (electrodes 1a,1b of the phase advancing capacitor illustrated in Fig.1) of a phase advancing capacitor are provided on the upper lid 3. As shown in Fig.3(b) which is the upper surface view of the upper lid 3, a fuse wire 20 which is mechanically interrupted is attached to the middle part of the upper lid 3.

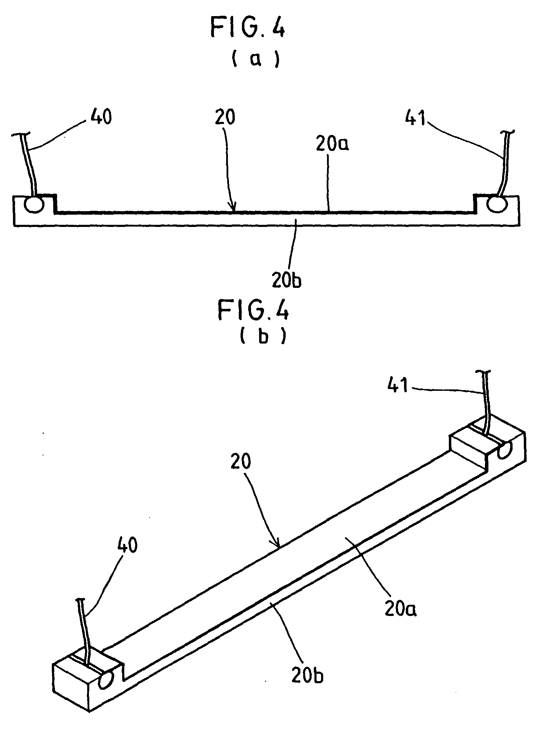

Fig.4(a) and (b) show the outline of the configuration of a fuse wire 20 illustrated in Fig.3, and the fuse wire 20 is constructed by depositing a conductive film 20a onto the surface of a thin plate material 20b such as easy-breaking glass or the like and by soldering the lead wires 40,41 to both the ends thereof. If this fuse wire 20 is adhered to the upper lid 3 of the phase advancing capacitor, the fuse wire 20 is interrupted when the upper lid 3 expands outwardly due to an increase of the internal pressure of the casing in line with the expansion of the phase advancing capacitor as shown in Fig.3(c) and (d), whereby abnormality of the phase advancing capacitor can be detected. If a relay RY shown in Fig.2 is connected to both ends of the fuse wire 20, the circuit breaker operates on the basis of abnormality of the phase advancing capacitor and simultaneously issues alarm. Furthermore, it is needless to say that this fuse wire 20 is applicable to the other technical fields of detecting a breakage of various kinds of pipings and a breakage of buildings as a mechanically breaking fuse.

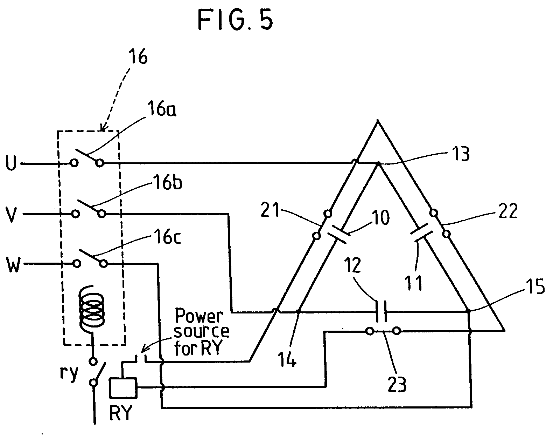

Fig.5 is a connection diagram between a phase advancing capacitor according to a fourth preferred embodiment of the invention and a tripping means. In the fourth preferred embodiment, fuses wires 21,22,23, the structure of which is identical to that shown in Fig.4, are respectively attached to three delta-connected phase advancing capacitors 10,11,12, and these fuse wires 21,22,23 are connected in series to each other. When any one of the fuse wires is interrupted, the relay RY is turned on to cause the relay switch ry to be opened and to cause each of the switches 16a,16b,16c of the breaker 16 to be also opened, whereby the phase advancing capacitors are tripped from power lines.

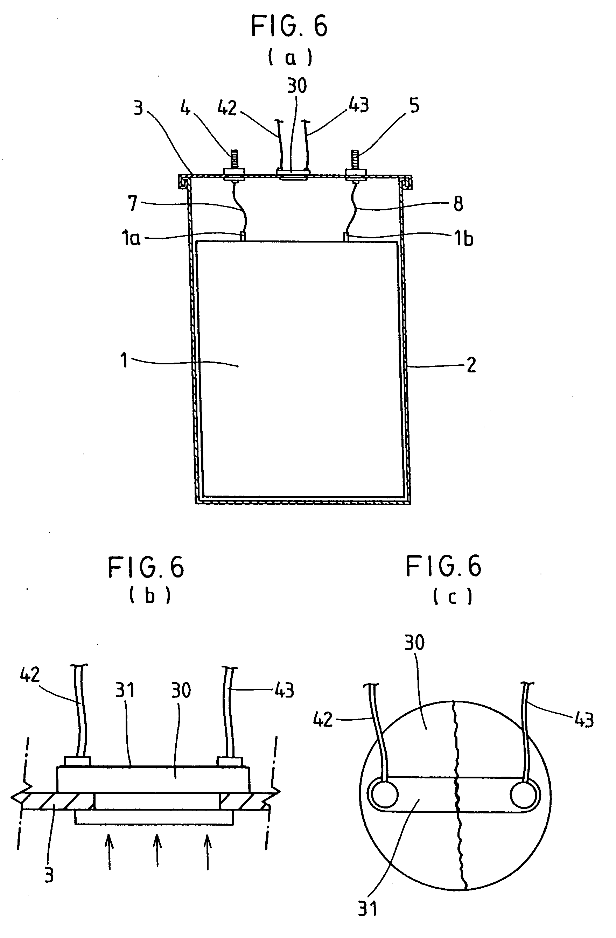

Fig.6 is a cross-sectional view of a phase advancing capacitor according to a fifth preferred embodiment of the invention. In the fifth preferred embodiment, an explosion-proof element 30 which is broken when the internal pressure exceeds an appointed pressure level is attached to the upper lid 3, and a conductive film 31 is coated on one side of the explosion proof element 30 to be used as a fuse wire, wherein the lead wires 42,43 are soldered to both ends of the film 31. If such a fuse wire is employed, it is possible to secure the same effect as that of the other abovementioned preferred embodiments.

## Claims

1. An abnormality detecting device for a phase advancing capacitor (1), (10), (11), or (13) for detecting abnormality thereof, comprising:
a fuse wire (20) disposed in a casing (2), in which said phase advancing capacitor (1), (10), (11), or (13) is accommodated in an airtight state, and mechanically interrupted when said casing (2) expands, and
a tripping means for causing said phase advancing capacitor (1), (10), (11), or (13) to trip from power lines by detecting interruption of said fuse wire (20).

2. An abnormality detecting device for a phase advancing capacitor (1), (10), (11), or (13) for detecting abnormality thereof, comprising:
a fuse wire (20) which is interrupted when an excessive higher harmonic current flows into said phase advancing capacitor (1), (10), (11), or (13), and
a tripping means for causing said phase advancing capacitor (1), (10), (11), or (13) to trip from power lines by detecting interruption of said fuse wire (20).

3. An abnormality detecting device as set forth in claim 1 or 2, having a warning means for outputting alarm when the same detects interruption of said fuse wire (20).
